# FASCICULE DE BREVET EUROPEEN

(11) **EP 4 246 780 B1**
(45) Date de publication et mention de la délivrance du brevet: **22.07.2026**
(21) Numéro de dépôt: 23161369.6
(22) Date de dépôt: 13.03.2023
(51) Int. Cl.: H02K 7/00, H02K 9/06, F16F 15/124, F16F 15/126, F16D 3/68

(54) **MOTEUR ÉLECTRIQUE ET PROCÉDÉ DE PRODUCTION CORRESPONDANT**
ELEKTROMOTOR UND VERFAHREN ZU SEINER HERSTELLUNG
ELECTRIC MOTOR AND METHOD FOR PRODUCING SAME

(30) Priorité: 14.03.2022 FR 2202202
(43) Date de publication de la demande: 20.09.2023
(73) Titulaire: ALSTOM Holdings, 93400 Saint-Ouen-sur-Seine (FR)
(72) Inventeur: FAKAM TCHAKOUE, Mathias, 25410 ROUTELLE (FR); MARNIAU, Pierre-Nicolas, 25000 BESANCON (FR); SIMIC, Momcilo, 25220 THISE (FR)
(74) Mandataire: Plasseraud IP

(56) Documents cités:
- CN-U- 205 744 990
- DE-A1- 102017 213 936
- FR-A3- 2 971 310
- JP-A- H07 213 017
- JP-U- S5 895 165
- JP-U- S57 203 661
- US-A1- 2019 170 195
- US-B2- 11 264 868

## Description

La présente invention concerne en général un moteur électrique auto-ventilé, c'est-à-dire comportant un ventilateur agencé de manière à refroidir le moteur électrique.

Un tel moteur électrique peut comprendre un stator, un rotor, un arbre rotatif entrainé en rotation par le rotor, et un ventilateur monté sur l'arbre rotatif. Le ventilateur est agencé de manière à souffler un courant d'air sur le rotor et le stator quand le rotor tourne, ce qui permet de refroidir le moteur électrique.

Le document JP H07 213017 A divulgue un moteur électrique comprenant un absorbeur de choc suivant le préambule de la revendication 1.

Un objectif constant dans le domaine est de minimiser la masse des pièces tournantes, et d'améliorer les performances aérauliques du ventilateur.

À cette fin, l'invention porte sur un moteur selon la revendication 1 et un procédé de fabrication selon la revendication 9.

Du fait que le support de ventilateur est fixé au moyeu seulement par l'intermédiaire de l'absorbeur de chocs, le support de ventilateur est découplé mécaniquement du moyeu, et donc de l'arbre rotatif.

Le transfert des vibrations entre le rotor et le ventilateur est réduit. En conséquence, il devient possible de réduire la masse et la rigidité du ventilateur. Ses performances aérauliques peuvent en conséquence être améliorées.

L'invention est particulièrement utile dans le cas d'un moteur électrique alimenté électriquement par un signal de tension du type PWM (Plus Width Modulation, ou modulation de largeur d'impulsion). Un tel signal de tension génère des variations de couple dans l'arbre rotatif, qui se propagent jusqu'au ventilateur en l'absence d'absorbeur de chocs. La présence de l'absorbeur de chocs permet de protéger le ventilateur et conduit à un dimensionnement mécanique réduit de celui-ci.

Le moteur électrique peut en outre présenter une ou plusieurs des caractéristiques ci-dessous, considérées individuellement ou selon toutes les combinaisons techniquement possibles :
- le moyeu et le support de ventilateur définissent ensemble une cavité sensiblement fermée, ayant une forme conjuguée de celle de l'absorbeur de chocs, dans laquelle l'absorbeur de chocs est coulé ;
- le moyeu est adhérisé à l'absorbeur de chocs, et le support de ventilateur est adhérisé à l'absorbeur de chocs ;
- l'absorbeur de chocs est une bague comprenant :
   - un anneau centré sur l'axe de rotation présentant des première et seconde grande faces sensiblement annulaires, une tranche radialement interne et une tranche radialement externe, et
   - une aile cylindrique coaxiale à l'axe de rotation, s'étendant axialement à partir de la seconde grande face, présentant une surface radialement interne, une surface radialement externe et une surface annulaire de bout ;
- le moyeu est une plaque rigidement fixée à l'arbre rotatif, présentant une tranche et une grande face frontale ayant une zone de bord jouxtant la tranche, le moyeu étant en contact par la zone de bord avec la seconde grande face de l'absorbeur de chocs et par la tranche avec la surface radialement interne de l'aile cylindrique de l'absorbeur de chocs ;
- le support de ventilateur comprend des première et seconde demi-bagues fixées de manière amovible l'une à l'autre, et agencées axialement de part et d'autre de l'absorbeur de chocs ;
- la première demi-bague comprend une première partie annulaire en contact avec la première grande face de l'absorbeur de chocs, et une première partie cylindrique solidaire de la première partie annulaire et en contact avec la tranche radialement interne de l'anneau de l'absorbeur de chocs ;
- la seconde demi-bague comprend une seconde partie annulaire en contact avec la surface annulaire de bout de la partie cylindrique de l'absorbeur de chocs, et une seconde partie cylindrique solidaire de la seconde partie annulaire en contact avec la surface radialement externe de l'aile cylindrique de l'absorbeur de chocs et avec la tranche radialement externe de l'anneau de l'absorbeur de chocs ;
- la première partie annulaire porte des dents coopérant avec des dents complémentaires de l'anneau, le moyeu portant d'autres dents coopérant avec d'autres dents complémentaires de l'anneau.

Selon un second aspect, l'invention porte sur un procédé de fabrication d'un moteur ayant les caractéristiques ci-dessus, le procédé comportant les étapes suivantes :
- mise en place du moyeu et du support de ventilateur sur un outil, le moyeu et le support de ventilateur définissant ensemble la cavité sensiblement fermée ayant une forme conjuguée de celle de l'absorbeur de chocs;
- coulage de l'absorbeur de chocs dans la cavité, le moyeu et le support de ventilateur étant fixés l'un à l'autre exclusivement par l'absorbeur de chocs après refroidissement de l'absorbeur de chocs.

D'autres caractéristiques et avantages de l'invention ressortiront de la description détaillée qui en est donnée ci-dessous, à titre indicatif et nullement limitatif, en référence aux figures annexées, parmi lesquelles :
- La figure 1 est une vue en perspective, partiellement éclatée, d'un moteur électrique selon l'invention, le stator étant représenté schématiquement ;
- La figure 2 est une vue en perspective, éclatée, de l'amortisseur de la figure 1 ; et
- La figure 3 est une vue en perspective, éclatée, de certaines pièces de l'amortisseur de la figure 2.

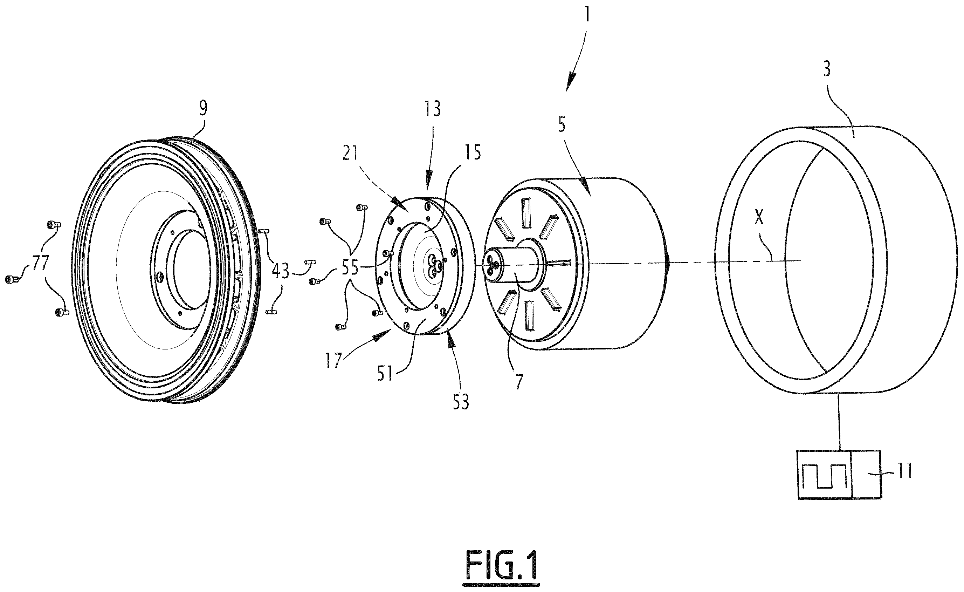

Le moteur électrique 1 représenté sur la figure 1 est typiquement un moteur de traction d'un véhicule ferroviaire, par exemple un train, ou un tramway.

En variante, ce moteur électrique est un moteur de traction d'un véhicule autre qu'un véhicule ferroviaire, par exemple un véhicule automobile tel qu'une voiture ou un camion. Alternativement, le moteur électrique n'est pas un moteur de traction mais équipe une installation statique de tout type.

Comme visible sur la figure 1, le moteur électrique 1 comprend un stator 3, un rotor 5, un arbre rotatif 7 entrainé en rotation autour d'un axe de rotation X par le rotor 5, et un ventilateur 9.

Le moteur électrique 1 est alimenté électriquement par une alimentation électrique 11.

L'alimentation électrique 11 alimente le moteur électrique 1 avec un courant électrique de type PWM.

Typiquement, l'alimentation électrique alimente électriquement le stator 3.

L'axe de rotation X correspond à l'axe central du rotor 5 et du stator 3.

L'arbre rotatif 7 est solidaire du rotor 5, et fait saillie hors du rotor 5 selon l'axe de rotation X.

Le ventilateur 9 est de tout type adapté. Il est rotatif autour de l'axe de rotation X. Il est configuré pour souffler un courant d'air vers le rotor 5 et le stator 3, axialement.

Selon l'invention, le moteur électrique comprend un amortisseur 13 liant en rotation le ventilateur 9 à l'arbre rotatif 7.

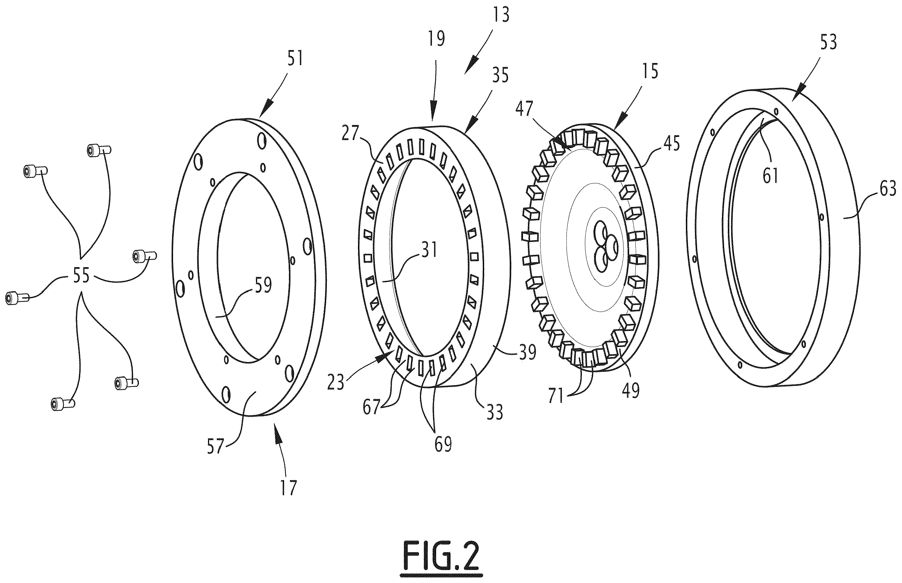

L'amortisseur 13, comme visible sur la figure 2, comprend :
- Un moyeu 15, monté sur l'arbre rotatif 7 ;
- Un support de ventilateur 17, sur lequel le ventilateur 9 est fixé ;
- Un absorbeur de chocs 19 en un matériau élastiquement déformable.

Le support de ventilateur 17 est avantageusement fixé au moyeu 15 seulement par l'intermédiaire de l'absorbeur de chocs 19.

En d'autres termes, tous les efforts passant entre le moyeu 15 et le support de ventilateur 17 sont transmis par l'absorbeur de chocs 19. Notamment, les vibrations se propageant dans l'arbre rotatif 17 sont transmises au ventilateur 9 à travers l'absorbeur de chocs 19, et seulement à travers l'absorbeur de chocs 19, ces vibrations étant au moins partiellement absorbées par l'absorbeur de chocs 19.

L'absorbeur de chocs 19 est conçu pour absorber les vibrations selon trois directions : radialement par rapport à l'axe de rotation X, tangentiellement autour de l'axe de rotation X, et axialement selon l'axe de rotation X.

Avantageusement, le moyeu 15 et le support de ventilateur 17 définissent ensemble une cavité 21 sensiblement fermée, ayant une forme conjuguée de celle de l'absorbeur de chocs 19.

Comme décrit plus bas, l'absorbeur de chocs 19 est avantageusement coulé dans la cavité 21.

Ainsi, le moyeu 15 est adhérisé à l'absorbeur de chocs 19, et le support de ventilateur 17 est également adhérisé à l'absorbeur de chocs 19.

Ceci permet d'une part de réaliser très facilement l'absorbeur de chocs à la forme et selon les cotes souhaitées.

Ceci permet également de fixer de manière rapide et commode le moyeu 15 au support de ventilateur 17. Aucune autre étape de montage n'est nécessaire pour assembler le moyeu et le support de ventilateur. Notamment, aucun organe mécanique tel que des vis, des tirants ou tout autre organe similaire n'est utilisé pour solidariser le moyeu et le support de ventilateur.

L'amortissement des vibrations passant du moyeu au support de ventilateur est excellent, du fait que ces vibrations sont exclusivement transmises par l'absorbeur de chocs.

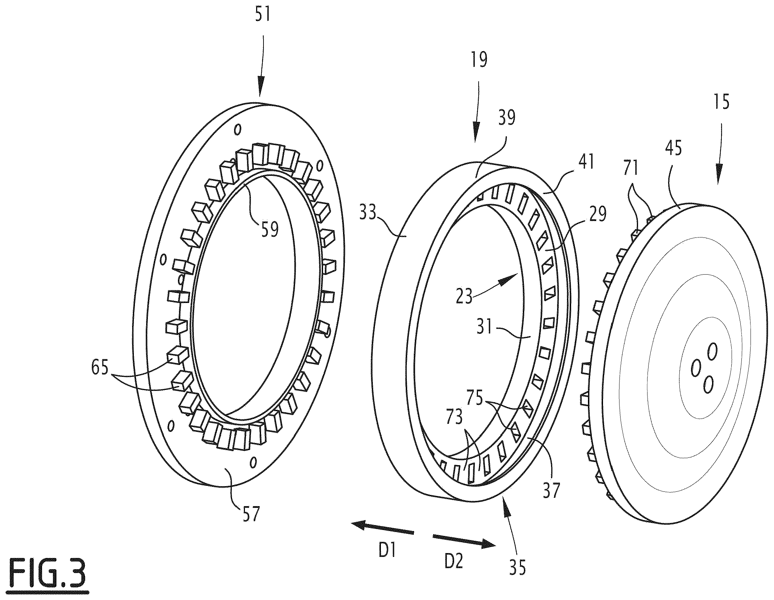

Comme illustré sur les figures 2 et 3, l'absorbeur de chocs 19 est une bague, comprenant :
- un anneau 23, centré sur l'axe de rotation X, présentant des premières et secondes grandes faces 25, 27 sensiblement annulaires, une tranche radialement interne 29 et une tranche radialement externe 31 ;
- une aile cylindrique 33, coaxiale à l'axe de rotation X, s'étendant axialement à partir de la seconde grande face 27.

L'anneau 23 s'étend sensiblement dans un plan perpendiculaire à l'axe de rotation X. Il est de forme générale circulaire, au sens où les tranches radialement interne et externe 31, 33 sont circulaires.

Les premières et secondes grandes faces 25, 27 sont tournées axialement respectivement dans des première et seconde directions D1, D2 opposées l'une à l'autre, matérialisées sur la figure 3.

L'aile cylindrique 35 s'étend axialement à partir de l'anneau 23, vers le rotor 5, c'est-à-dire selon la seconde direction D2.

Elle est formée le long du bord radialement externe de l'anneau, c'est-à-dire le long de la tranche radialement externe 33. Elle présente une faible épaisseur radiale au regard de la largeur de l'anneau 23, de telle sorte que la plus grande partie de la seconde grande face 29 reste libre et est située radialement vers l'intérieur de l'aile cylindrique 35.

L'aile cylindrique 35 présente une surface radialement interne 37, une surface radialement externe 39 et une surface annulaire de bout 41.

La surface radialement externe 39 s'inscrit axialement dans le prolongement de la tranche radialement externe 33.

La surface annulaire de bout 41 est centrée sur l'axe de rotation X. Elle s'étend dans un plan perpendiculaire à l'axe de rotation X. Elle constitue l'extrémité de l'aile cylindrique 35, à l'opposé de l'anneau 23.

Comme visible sur les figures 2 et 3, le moyeu 15 est une plaque rigidement fixée à l'arbre rotatif 7.

Dans l'exemple représenté, le moyeu 15 est en forme de disque, et donc a une forme généralement circulaire.

Il est rigidement fixé à l'extrémité de l'arbre rotatif 7 par des vis 43, visible sur la figure 1.

Le moyeu 15 s'étend généralement dans un plan perpendiculaire à l'axe de rotation X.

Le moyeu 15 présente une tranche 45, et une grande face frontale 47.

La grande face frontale 47 est tournée axialement dans la première direction D1.

La grande face frontale 47 présente une zone de bord 49 qui jouxte la tranche 45.

Le moyeu 15 est en contact par sa zone de bord 49 avec la seconde grande face 29 de l'absorbeur de chocs 19.

Le moyeu 15 est également en contact par sa tranche 45 avec la surface radialement interne 37 de l'aile cylindrique 35 de l'absorbeur de chocs 19.

La zone de bord 49 et la tranche 45 sont en appui et sont adhérisées à l'absorbeur de chocs 19.

Le support de ventilateur 17 comprend des premières et secondes demi-bagues 51, 53 fixées de manière amovible l'une à l'autre, et agencées axialement de part et d'autre de l'absorbeur de chocs 19.

Typiquement, les premières et secondes demi-bagues 51, 53 sont fixées l'une à l'autre par des vis 55, représentées sur les figures 1 et 2.

La première demi-bague 51 comprend une première partie annulaire 57 en contact avec la première grande face 27 de l'anneau 23 de l'absorbeur de chocs 19.

La première demi-bague 51 comprend encore une première partie cylindrique 59, solidaire de la première partie annulaire 57 et en contact avec la tranche radialement interne 31 de l'anneau 23 de l'absorbeur de chocs 19.

La première partie annulaire 57 est centrée sur l'axe de rotation X. Elle s'étend sensiblement dans un plan perpendiculaire à l'axe de rotation X.

La première partie cylindrique 59 s'étend axialement suivant la seconde direction D2 à partir de la première partie annulaire 57. Elle s'étend le long d'un bord radialement interne de la première partie annulaire 57.

La seconde demi-bague 53 comprend une seconde partie annulaire 61, en contact avec la surface annulaire de bout 41 de la partie cylindrique 35 de l'absorbeur de chocs 19.

La seconde demi-bague 53 comprend également une seconde partie cylindrique 63, solidaire de la seconde partie annulaire 61 et en contact avec la surface radialement externe 39 de l'aile cylindrique 35 de l'absorbeur de chocs 19, et avec la tranche radialement externe 33 de l'anneau 23 de l'absorbeur de chocs 19.

La seconde partie annulaire 61 est centrée sur l'axe de rotation X et s'étend dans un plan perpendiculaire à l'axe de rotation X. Elle forme une collerette rentrante à une extrémité axiale de la seconde partie cylindrique 53, opposée à la première demi-bague 51.

La seconde partie cylindrique 53 est coaxiale à l'axe de rotation X.

La cavité 21 est ainsi délimitée :
- par la tranche 45 et la zone de bord 49 du moyeu ;
- par la première partie annulaire 57 et la première partie cylindrique 59 de la première demi-bague 51 ; et
- par la seconde partie annulaire 61 et la seconde partie cylindrique 63 de la seconde demi-bague 53.

Cette cavité est sensiblement fermée au sens où il n'existe que des interstices de faible largeur entre la première partie cylindrique 59 et le moyeu 15, et entre la seconde partie annulaire 61 et le moyeu 15.

Ces interstices sont suffisamment étroits pour permettre de couler en place l'absorbeur de chocs 19. Ils sont suffisamment larges pour que, en fonctionnement du moteur électrique, il n'y ait pas de contact direct entre le support de ventilateur 17 et le moyeu 15.

Il est à noter que le fait que l'absorbeur de chocs 19 soit logé dans une cavité sensiblement fermée permet d'éviter le fluage de la matière constituant l'absorbeur de chocs hors de son logement.

L'absorbeur de chocs est par exemple en un caoutchouc élastomère.

Avantageusement, la première partie annulaire 51 porte des dents 65 coopérant avec des dents complémentaires 67 ménagées sur l'anneau 23 de l'absorbeur de chocs. Les dents 65 sont agencées en un cercle, sur la face de la première partie annulaire 57 qui est en contact avec l'anneau 23.

Les dents complémentaires 67 sont ménagées sur la première grande face 27 de l'anneau 23. Elles sont délimitées chacune entre deux creux 69, les dents 65 étant reçues dans les creux 69.

De la même manière, le moyeu 15 porte d'autres dents 71, coopérant avec d'autres dents complémentaires 73 de l'anneau 23.

Les autres dents 71 sont portées par la zone de bord 49 de la grande face frontale 47 du moyeu.

Les autres dents complémentaires 73 sont ménagées entre des creux 75 formés dans la seconde grande face 29 de l'anneau 23 de l'absorbeur de chocs.

Les autres dents 71 sont agencées en cercle, centrées sur l'axe de rotation X. Elles sont engagées chacune dans un des creux 75.

Typiquement, les dents 65 sont décalées circonférentiellement par rapport aux autres dents 71, chaque dent 65 étant circonférentiellement disposée entre deux autres dents 71 et inversement.

De même, les dents complémentaires 67 sont décalées circonférentiellement par rapport aux autres dents complémentaires 73. Plus précisément, chaque creux 69 constitue l'une des autres dents complémentaires 73, et chaque creux 75 constitue l'une des dents complémentaires 67.

Ainsi, les dents 65 et les autres dents 71 sont agencées sur un même cercle, avec interposition circonférentielle d'un voile de matière de l'absorbeur de chocs entre les dents 65 et 71.

La transmission du couple du moyeu 15 au support de ventilateur 17 est donc particulièrement bonne.

Le ventilateur 9 est fixé de manière amovible sur le support de ventilateur 17, typiquement par des vis telles que les vis 77 représentées sur la figure 1.

Le procédé de fabrication du moteur décrit ci-dessus va maintenant être détaillé.

Le stator 3, le rotor 5 et l'arbre rotatif 7 sont assemblés de manière usuelle, ces étapes n'étant donc pas décrites ici.

Le procédé comporte par ailleurs les étapes suivantes, visant à fabriquer l'amortisseur 13.

Le moyeu 15, et les premières et secondes demi-bagues 51, 53 du support de ventilateur 17 sont d'abord obtenus.

Les premières et secondes demi-bagues 51, 53 sont ensuite assemblées l'une à l'autre, en emprisonnant le moyeu 15 entre les deux demi-bagues 51, 53.

Le procédé comporte encore les étapes suivantes :
- mise en place du moyeu 15 et du support de ventilateur 17 sur un outil, le moyeu 15 et le support de ventilateur 17 définissant ensemble la cavité sensiblement fermée 21, ayant une forme conjuguée de celle de l'absorbeur de chocs 19;
- coulage de l'absorbeur de chocs 19 dans la cavité 21.

L'outil est typiquement un moule d'injection.

Le moyeu 15 et le support de ventilateur 17 sont maintenus en place l'un par rapport à l'autre dans l'outil.

Le matériau constituant l'absorbeur de chocs 19 est injecté à chaud dans la cavité 21.

Après refroidissement de l'absorbeur de chocs 19, le moyeu 15 et le support de ventilateur 17 sont fixés l'un à l'autre, exclusivement par l'absorbeur de chocs 19.

L'amortisseur de chocs 19 est ensuite extrait de l'outil.

Le procédé comporte ensuite une étape de montage de l'amortisseur de chocs 19 sur l'arbre rotatif 7, et une étape de montage du ventilateur 9 sur le support de ventilateur 17.

En variante, le support de ventilateur 17 est d'une pièce.

En variante, l'absorbeur de chocs n'est pas une bague, mais présente une forme générale de disque, couvrant la grande face frontale du moyeu.

## Revendications

1. Moteur électrique (1) comprenant un stator (3), un rotor (5), un arbre rotatif (7) entraîné en rotation autour d'un axe de rotation (X) par le rotor (5), un ventilateur (9), et un amortisseur (13) liant en rotation le ventilateur (9) à l'arbre rotatif (7), l'amortisseur (13) comprenant :
- un moyeu (15), monté sur l'arbre rotatif (7) ;
- un support de ventilateur (17), sur lequel le ventilateur (9) est fixé ;
- un absorbeur de chocs (19) en un matériau élastiquement déformable, le support de ventilateur (17) étant fixé au moyeu (15) seulement par l'intermédiaire de l'absorbeur de chocs (19) ;
**caractérisé en ce que** le moyeu (15) et le support de ventilateur (17) définissent ensemble une cavité (21) sensiblement fermée, ayant une forme conjuguée de celle de l'absorbeur de chocs (19), dans laquelle l'absorbeur de chocs (19) est coulé, le moyeu (15) et le support de ventilateur (17) étant fixés l'un à l'autre exclusivement par l'absorbeur de chocs (19) après refroidissement de l'absorbeur de chocs (19).

2. Moteur selon la revendication 1, dans lequel le moyeu (15) est adhérisé à l'absorbeur de chocs (19), et le support de ventilateur (17) est adhérisé à l'absorbeur de chocs (19).

3. Moteur selon l'une quelconque des revendications précédentes, dans lequel l'absorbeur de chocs (19) est une bague comprenant :
- un anneau (23) centré sur l'axe de rotation (X) présentant des première et seconde grande faces (27, 29) sensiblement annulaires, une tranche radialement interne (31) et une tranche radialement externe (33), et
- une aile cylindrique (35) coaxiale à l'axe de rotation (X), s'étendant axialement à partir de la seconde grande face (29), présentant une surface radialement interne (37), une surface radialement externe (39) et une surface annulaire de bout (41).

4. Moteur selon la revendication 3, dans lequel le moyeu (15) est une plaque rigidement fixée à l'arbre rotatif (7), présentant une tranche (45) et une grande face frontale (47) ayant une zone de bord (49) jouxtant la tranche (45), le moyeu (15) étant en contact par la zone de bord (49) avec la seconde grande face (29) de l'absorbeur de chocs (19) et par la tranche (45) avec la surface radialement interne (37) de l'aile cylindrique (35) de l'absorbeur de chocs (19).

5. Moteur selon la revendication 3 ou 4, dans lequel le support de ventilateur (17) comprend des première et seconde demi-bagues (51, 53) fixées de manière amovible l'une à l'autre, et agencées axialement de part et d'autre de l'absorbeur de chocs (19).

6. Moteur selon la revendication 5, dans lequel la première demi-bague (51) comprend une première partie annulaire (57) en contact avec la première grande face (27) de l'absorbeur de chocs (19), et une première partie cylindrique (59) solidaire de la première partie annulaire (57) et en contact avec la tranche radialement interne (31) de l'anneau (23) de l'absorbeur de chocs (19).

7. Moteur selon la revendication 5 ou 6, dans lequel la seconde demi-bague (53) comprend une seconde partie annulaire (61) en contact avec la surface annulaire de bout (41) de la partie cylindrique (35) de l'absorbeur de chocs (19), et une seconde partie cylindrique (63) solidaire de la seconde partie annulaire (61) en contact avec la surface radialement externe (39) de l'aile cylindrique (35) de l'absorbeur de chocs (19) et avec la tranche radialement externe (33) de l'anneau (23) de l'absorbeur de chocs (19).

8. Moteur selon l'une quelconque des revendications précédentes en combinaison avec les revendications 4 et 6, dans lequel la première partie annulaire (57) porte des dents (65) coopérant avec des dents complémentaires (67) de l'anneau (23), le moyeu (15) portant d'autres dents (71) coopérant avec d'autres dents complémentaires (73) de l'anneau (23).

9. Procédé de fabrication d'un moteur selon la revendication 1, le procédé comprenant les étapes suivantes :
- mise en place du moyeu (15) et du support de ventilateur (17) sur un outil, le moyeu (15) et le support de ventilateur (17) définissant ensemble la cavité sensiblement fermée (21) ayant une forme conjuguée de celle de l'absorbeur de chocs (19) ;
- coulage de l'absorbeur de chocs (19) dans la cavité (21), le moyeu (15) et le support de ventilateur (17) étant fixés l'un à l'autre exclusivement par l'absorbeur de chocs (19) après refroidissement de l'absorbeur de chocs (19).

## Patentansprüche

1. Elektromotor (1), umfassend einen Stator (3), einen Rotor (5), eine rotierende Welle (7), welche in Rotation um eine Rotationsachse (X) durch den Rotor (5) angetrieben wird, einen Lüfter (9) und einen Dämpfer (13), welcher in Rotation den Lüfter (9) mit der rotierenden Welle (7) verbindet, wobei der Dämpfer (13) umfasst:
- eine Nabe (15), welche an der rotierenden Welle (7) montiert ist;
- einen Lüfterträger (17), an welchem der Lüfter (9) befestigt ist;
- einen Stoßabsorber (19) aus einem elastisch verformbaren Material, wobei der Lüfterträger (17) an der Nabe (15) ausschließlich mittels des Stoßabsorbers (19) befestigt ist;
**dadurch gekennzeichnet, dass**
die Nabe (15) und der Lüfterträger (17) zusammen einen im Wesentlichen geschlossenen Hohlraum (21) definieren, welcher eine entgegengesetzte Form zu derjenigen des Stoßabsorbers (19) aufweist, wobei der Stoßabsorber (19) gegossen ist, wobei die Nabe (15) und der Lüfterträger (17) aneinander ausschließlich durch den Stoßabsorber (19) nach einem Kühlen des Stoßabsorbers (19) befestigt sind.

2. Motor nach Anspruch 1, wobei die Nabe (15) an dem Stoßabsorber (19) angebracht ist und der Lüfterträger (17) an dem Stoßabsorber (19) angebracht ist.

3. Motor nach einem der vorhergehenden Ansprüche, wobei der Stoßabsorber (19) ein Ringelement ist, umfassend:
- einen an der Rotationsachse (X) zentrierten Ring (23), welcher erste und zweite große Flächen (27, 29), welche im Wesentlichen ringförmig sind, einen radialen inneren Rand (31) und einen radial äußeren Rand (33) aufweist, und
- einen zylindrischen Flügel (35), welcher koaxial zu der Rotationsachse (X) ist, welcher sich axial ausgehend von der zweiten großen Fläche (29) erstreckt, eine radial innere Fläche (37), eine radial äußere Fläche (39) und eine ringförmige Endfläche (41) aufweist.

4. Motor nach Anspruch 3, wobei die Nabe (15) eine Platte ist, welche starr an der rotierenden Welle (7) befestigt ist, welche einen Rand (45) und eine frontale große Fläche (47) aufweist, welche eine Kantenzone (49) aufweist, welche an den Rand (45) angrenzt, wobei die Nabe (15) in Kontakt durch die Kantenzone (49) mit der zweiten großen Fläche (29) des Stoßabsorbers (19) und durch den Rand (45) mit der radial inneren Fläche (37) des zylindrischen Flügels (35) des Stoßabsorbers (19) ist.

5. Motor nach Anspruch 3 oder 4, wobei der Lüfterträger (17) erste und zweite Halbringe (51, 53) umfasst, welche in lösbarer Weise aneinander befestigt und axial beiderseits des Stoßabsorbers (19) angebracht sind.

6. Motor nach Anspruch 5, wobei der erste Halbring (51) einen ersten ringförmigen Teil (57) in Kontakt mit der ersten großen Fläche (27) des Stoßabsorbers (19) und einen ersten zylindrischen Teil (59) umfasst, welcher mit dem ersten ringförmigen Teil (57) verbunden und in Kontakt mit dem radial inneren Rand (31) des Rings (23) des Stoßabsorbers (19) ist.

7. Motor nach Anspruch 5 oder 6, wobei der zweite Halbring (53) einen zweiten ringförmigen Teil (61) in Kontakt mit der ringförmigen Endfläche (41) des zylindrischen Teils (35) des Stoßabsorbers (19) umfasst, sowie einen zweiten zylindrischen Teil (63), welcher mit dem zweiten ringförmigen Teil (61) in Kontakt mit der radial äußeren Fläche (39) des zylindrischen Flügels (35) des Stoßabsorbers (19) und mit dem radial äußeren Rand (33) des Rings (23) des Stoßabsorbers (19) verbunden ist.

8. Motor nach einem der vorhergehenden Ansprüche in Kombination mit den Ansprüchen 4 und 6, wobei der erste ringförmige Teil (57) Zähne (65) trägt, welche mit komplementären Zähnen (67) des Rings (23) zusammenwirken, wobei die Nabe (15) weitere Zähne (71) trägt, welche mit weiteren komplementären Zähnen (73) des Rings (23) zusammenwirken.

9. Verfahren zum Herstellen eines Motors nach Anspruch 1, das Verfahren umfassend die folgenden Schritte:
- Vorbereiten der Nabe (15) und des Lüfterträgers (17) auf einem Werkzeug, wobei die Nabe (15) und der Lüfterträger (17) gemeinsam den im Wesentlichen geschlossenen Hohlraum (21) definieren, welcher eine entgegengesetzte Form zu derjenigen des Stoßabsorbers (19) aufweist;
- Gießen des Stoßabsorbers (19) in dem Hohlraum (21), wobei die Nabe (15) und der Lüfterträger (17) aneinander ausschließlich durch den Stoßabsorber (19) nach einem Kühlen des Stoßabsorbers (19) befestigt werden.

## Claims

1. Electric motor (1) comprising a stator (3), a rotor (5), a rotary shaft (7) driven in rotation about an axis of rotation (X) by the rotor (5), a fan (9), and a damper (13) rotatably connecting the fan (9) to the rotary shaft (7), the damper (13) comprising:
- a hub (15), mounted to the rotary shaft (7);
- a fan support (17), to which the fan (9) is attached ;
- a shock absorber (19) made of an elastically-deformable material, the fan support (17) being attached to the hub (15) only via the shock absorber (19);
**characterised in that** the hub (15) and the fan support (17) together define a substantially closed cavity (21), having a shape complementary to that of the shock absorber (19), in which the shock absorber (19) is cast, the hub (15) and the fan support (17) being attached to each other exclusively by the shock absorber (19) after cooling of the shock absorber (19).

2. Motor according to claim 1, wherein the hub (15) is bonded to the shock absorber (19), and the fan support (17) is bonded to the shock absorber (19).

3. Motor according to any one of the preceding claims, wherein the shock absorber (19) is a ring comprising:
- a ring (23) centred on the axis of rotation (X) having substantially annular first and second large faces (27, 29), a radially inner slice (31) and a radially outer slice (33), and
- a cylindrical wing (35) coaxial to the axis of rotation (X), extending axially from the second large face (29), having a radially inner surface (37), a radially outer surface (39) and an annular tip surface (41).

4. Motor according to claim 3, wherein the hub (15) is a plate rigidly attached to the rotary shaft (7), having a slice (45) and a large front face (47) having an edge zone (49) adjoining the slice (45), the hub (15) being in contact through the edge zone (49) with the second large face (29) of the shock absorber (19) and through the slice (45) with the radially inner surface (37) of the cylindrical wing (35) of the shock absorber (19).

5. Motor according to claim 3 or 4, wherein the fan support (17) comprises first and second half-rings (51, 53) removably attached to each other, and arranged axially on either side of the shock absorber (19).

6. Motor according to claim 5, wherein the first half-ring (51) comprises a first annular part (57) in contact with the first large face (27) of the shock absorber (19), and a first cylindrical part (59) integral with the first annular part (57) and in contact with the radially inner slice (31) of the ring (23) of the shock absorber (19).

7. Motor according to claim 5 or 6, wherein the second half-ring (53) comprises a second annular part (61) in contact with the annular tip surface (41) of the cylindrical part (35) of the shock absorber (19), and a second cylindrical part (63) integral with the second annular part (61) in contact with the radially outer surface (39) of the cylindrical wing (35) of the shock absorber (19) and with the radially outer slice (33) of the ring (23) of the shock absorber (19).

8. Motor according to any one of the preceding claims in combination with claims 4 and 6, wherein the first annular part (57) carries teeth (65) cooperating with complementary teeth (67) of the ring (23), the hub (15) carrying other teeth (71) cooperating with other complementary teeth (73) of the ring (23).

9. Method for manufacturing a motor according to claim 1, the method comprising the following steps of:
- placing the hub (15) and the fan support (17) on a tool, the hub (15) and the fan support (17) defining together the substantially closed cavity (21) having a shape complementary to that of the shock absorber (19);
- casting the shock absorber (19) into the cavity (21), the hub (15) and the fan support (17) being attached together exclusively by the shock absorber (19) after cooling the shock absorber (19).
